# EUROPÄISCHE PATENTSCHRIFT

(11) **EP 3 386 057 B1**
(45) Veröffentlichungstag und Bekanntmachung des Hinweises auf die Patenterteilung: **09.02.2022**
(21) Anmeldenummer: 18165929.3
(22) Anmeldetag: 05.04.2018
(51) Int. Cl.: H02J 3/01, H02J 3/24, H02J 3/38

(54) **WINDENERGIEANLAGE**
WIND ENERGY SYSTEM
ÉOLIENNE

(30) Priorität: 06.04.2017 DE 102017003375
(43) Veröffentlichungstag der Anmeldung: 10.10.2018
(73) Patentinhaber: Siemens Gamesa Renewable Energy Service GmbH, 20097 Hamburg (DE)
(72) Erfinder: Letas, Heinz-Hermann, 24796 Bovenau (DE)
(74) Vertreter: Glawe, Delfs, Moll

(56) Entgegenhaltungen:
- WO-A2-2013/110279
- DE-A1-102008 018 497
- DE-A1-102015 101 766
- US-A1- 2009 267 431
- FEUERSTACK P ET AL: "EMC FILTER FOR PWM INVERTER-FED MOTOR DRIVES TO SUPPRESS TRAVELLING WAVES ON LONG POWER LINES BETWEEN INVERTER AND MOTOR", 8TH EUROPEAN CONFERENCE ON POWER ELECTRONICS AND APPLICATIONS. LAUSANNE, CH, SEPT. 7 - 9, 1999; [EPE . EUROPEAN CONFERENCE ON POWER ELECTRONICS AND APPLICATIONS], EPE ASSOCIATION, BRUSSELS, BE, vol. CONF. 8, 7 September 1999 (1999-09-07), pages 1-09, XP000890330, ISBN: 978-90-75815-04-7
- BOLSENS B ET AL: "Transmission line effects on motor feed cables: Terminator design and analysis in the laplace-domain", ELECTRIC MACHINES AND DRIVES CONFERENCE, 2003. IEMDC'03. IEEE INTERNAT IONAL JUNE 1-4, 2003, PISCATAWAY, NJ, USA,IEEE, vol. 3, 1 June 2003 (2003-06-01), pages 1866-1872, XP010644562, ISBN: 978-0-7803-7817-9

## Beschreibung

Die Erfindung betrifft eine Windenergieanlage mit einem Windrotor, einem davon angetriebenen Generator, der mit einem Umrichter zusammenwirkt zur Erzeugung elektrischer Leistung, und ein Leitungssystem zum Anschluss an den Umrichter, mit einem stromführenden Leiter.

Frequenzumrichter mit dem Prinzip der Pulswechselrichter, wie sie in Windenergieanlage eingesetzt werden, erzeugen pulsweitenmodulierte rechteckförmige Spannungen. Für Generatoren oder Transformatoren weisen diese Rechteckspannungen zu hohe Flankensteilheiten auf, die bauteilintern Resonanzen und Überspannungen auslösen können.

Standardmäßig werden sogenannte du/dt-Filter an der Netzseite und Generatorseite einer Windenergieanlage eingesetzt. Es ist bekannt du/dt-Umrichterfilter passend zu dem Leitungssystem beispielsweise einer Stromschiene auszulegen. Stromschienen mit hoher kapazitiver Last (auch der Begriff kapazitive Beläge wird oft dafür verwendet) benötigen besonders flache Anstiege der Spannung was Filter sehr aufwendig macht. Nicht immer können die Filter so angepasst werden, dass das resonante Verhalten der Leitungssysteme unterdrückt werden kann. Außerdem ist es erforderlich, die Filter je nach angeschlossenem Leitungssystem auszulegen.

Umrichterfilter funktionieren gut, solange die Impedanz des angeschlossenen Leitungssystems die Filter und deren Dämpfung nicht verstimmen. Stromschienen oder Kabel mit hoher kapazitiver Last (kapazitiven Belägen) können eine solche ungewünschte Verstimmung bewirken. Die Folge sind höhere Spannungen als erwartet und entstandene Schwingungen werden nicht ausreichend schnell abgedämpft. Folgepulse in Resonanz können unbeherrschbar hohe Überspannungen bewirken. Nicht immer ist eine Änderung des Umrichter du/dt-Filter möglich oder ausreichend, da das Leitungssystem selbst grundsätzlich das resonante Verhalten behält.

Aus dem Dokument DE 10 2015 101 766 A1 ist eine Vorrichtung zur Abgabe elektrischer Leistung, insbesondere zur Abgabe regenerativ erzeugter elektrischer Leistung an eine Verbraucherimpedanz, welche mindestens einen Umrichter und mindestens einen Filter aufweist, bekannt. Dabei sind Mittel zur Bestimmung von mindestens einem Filterstrom in mindestens einem Filter vorgesehen.

Das Dokument US 2009/0267431 A1 betrifft einen Abschlusswiderstand für Stromleitungen, die zwischen Motorantrieben und einem angeschlossenen dreiphasigen Wechselstrommotor kommunizieren.

Das Dokument Bolsens et al: "Transmission line effects on motor feed cables: Terminator design and analysis in the laplace-domain" widmet sich leitungstheroetischen Aspekten beim Design von Abschlusswiderständen von Motoranschlusskabeln.

Der Erfindung liegt die Aufgabe zugrunde, eine Windenergieanlage bereitzustellen, die Resonanzen und Überspannungen im Leitungssystem dämpft und verringert. Die Aufgabe wird gelöst mit den Merkmalen des unabhängigen Anspruchs. Vorteilhafte Ausführungsformen sind in den Unteransprüchen angegeben.

Erfindungsgemäß ist an einem Ende des Leiters ein Impedanzglied angeschlossen.

Der Erfindung liegt die Erkenntnis zugrunde, dass durch die Anordnung eines Impedanzglieds am Ende des Leiters Wanderwellen auf dem Leiter effektiv gedämpft werden. Ein weiterer technischer Vorteil liegt darin, dass die herkömmlichen du/dt-Umrichterfilter nun standardisiert werden können. Eine Anpassung auf beispielsweise unterschiedliche Turmhöhen und damit verbundenen unterschiedlichen Längen eines Leitungssystems bevorzugt einer Stromschiene, und/oder herstellerabhängige Eigenarten einer Stromschiene und/oder Leitungsbelägen entfällt.

In einer bevorzugten Ausführungsform der Erfindung ist das Leitungssystem ein Kabelsystem und/oder eine Stromschiene. Stromschienen können hohe Ströme tragen.

In einer vorteilhaften Ausführungsform der Erfindung ist das Impedanzglied ein Dämpfungswiderstand. Die Verwendung eines ohmschen Widerstands ist besonders preiswert und dennoch effektiv. Durch den Dämpfungswiderstand wird die Reflexion der Welle am Ende der Leitung gedämpft.

Vorzugsweise entspricht der Dämpfungswiderstand dem Wellenwiderstand des Leiters. In dieser Ausführungsform wird eine besonders effektive Dämpfung der Schwingung erreicht.

In einer vorteilhaften Ausführungsform der Erfindung umfasst das Impedanzglied einen Koppelkondensator. Um eine Dauerbelastung des Leitungssystems durch die Dämpfungswiderstände zu vermeiden, werden Koppelkondensatoren verwendet, die dafür sorgen, dass die Widerstände nur dynamisch an den Schaltflanken belastet werden. In dem Fall der Verwendung eines RC-Glieds ist der Widerstand für den dynamischen Abschluss der Leitung zuständig während sich der Kondensator dabei auf-/umlädt und damit die Widerstände im Anschluss der Flankenwirkung wieder ausschaltet. Dadurch kann die Verlustleistung reduziert werden. Zur Verlustminimierung sollten die Kondensatoren so klein wie möglich gehalten werden.

Das Leitungssystem umfasst einen Nullleiter, wobei das Impedanzglied zwischen dem Nullleiter und dem Leiter angeschlossen ist. Auf dem Leiter gibt es unterschiedliche Spannungswanderwellen. Insbesondere die Resonanzen der gleichgetakteten Spannungswanderwellen zwischen Leiter und Nullleiter werden durch diese Ausführung gedämpft.

In einem erläuternden Beispiel weist das Leitungssystem einen zweiten stromführenden Leiter auf, wobei das Impedanzglied zwischen dem ersten und zweiten Leiter angeschlossen ist. Dadurch können insbesondere die Resonanzen von gegengetakteten Spannungswanderwellen gedämpft werden. Die Spannungswanderwellen auf der Leitung können so effektiv gedämpft werden durch ein Impedanzglied ohne Anschluss an den Nullleiter.

In einer vorteilhaften Ausführungsform der Erfindung ist ein zweites Impedanzglied am Ende des Leiters (30a, 30b, 30c) vorgesehen, das zwischen dem Leiter und dem zweiten Leiter angeschlossen ist. Auf diese Weise werden zusätzlich zu den Spannungswanderwellen zwischen dem Leiter und dem Nullleiter auch die Spannungswanderwellen zwischen den Leitern gedämpft. Grundsätzlich erfüllt bereits das erste Impedanzglied auch eine solche Wirkung, ist aber in der Wirkung nicht optimal.

Eine Mischung aus einem ersten und einem zweiten Impedanzglied gestattet die optimale Anpassung an nicht identische Wellenwiderstände zwischen Leiter und Leiter einerseits und Leiter und Nullleiter andererseits. Die Auslegung der Impedanzglieder muss immer passend zu den charakteristischen Impedanzen des Leitungssystems und den Eigenschaften des Umrichters, wie Schaltfrequenz, Filter und Überspannung, erfolgen.

Bevorzugt ist das Impedanzglied in einem Stromschienenkasten angeordnet. Ein Extragehäuse sollte möglichst vermieden werden, da hier ein doppelter Aufwand für den Anschluss der Leistungskabel notwendig wird. Nicht bevorzugt ist darüber hinaus der Generator-Klemmkasten, da es hier sehr warm wird.

Vorzugsweise weist das Impedanzglied eine Kühlung auf. Insbesondere ist eine Kühlung für die Dämpfungswiderstände vorgesehen, da sich diese durch die hohen Ströme erwärmen und diese somit ihre elektrischen Eigenschaften verändern.

Die Erfindung wird nachfolgend unter Bezugnahme auf die beigefügten Zeichnungen anhand einer vorteilhaften Ausführungsform beispielhaft beschrieben. Es zeigen:
Fig. 1: eine Übersichtsdarstellung einer Windenergieanlage in einem Ausführungsbeispiel der Erfindung;
Fig. 2: ein Ersatzschaltbild eines Einphasenkabels für kleine Frequenzen;
Fig. 3: ein Ersatzschaltbild einer Stromschiene (auch drei Kabeln) dreiphasig für kleine Frequenzen;
Fig. 4: ein Ersatzschaltbild eines Kettenleiters einer erfindungsgemäßen Stromschiene (auch drei Kabel) dreiphasig für hohe Frequenzen mit Spannungsquelle und Leitungsabschluss;
Fig. 5: Schaltbare Spannungsquelle mit Rampenfunktion aus Fig. 3;
Fig. 6: vergrößerte Darstellung eines Elements des Kettenleiters aus Fig. 3;
Fig. 7: vergrößerte Darstellung eines doppelten Leitungsabschlusses aus Fig. 3;
Fig. 8: zeitabhängige Spannungsdiagramme ohne Leitungsabschluss am Leitungsanfang a) und b) und am Leitungsende c) und d) ;
Fig. 9: zeitabhängige Spannungsdiagramme mit Leitungsabschluss am Leitungsanfang a) und b) und am Leitungsende c) und d) .

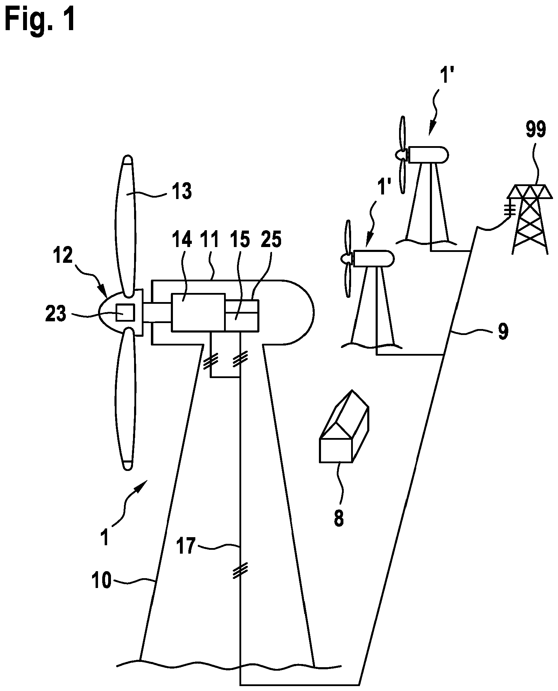

In Fig. 1 ist eine Windenergieanlage 1 gemäß einem Ausführungsbeispiel der Erfindung gezeigt. Die Windenergieanlage 1 ist in ihren Grundzügen konventionell aufgebaut. Die Windenergieanlage 1 umfasst einen Turm 10, an dessen oberem Ende ein Maschinenhaus 11 in Azimutrichtung schwenkbar angeordnet ist. Ein Windrotor 12 mit mehreren hinsichtlich ihres Einstellwinkels verstellbaren Rotorblättern 13 ist drehbar an einer Stirnseite des Maschinenhauses 11 gelagert. Der Windrotor 12 treibt über eine Rotorwelle einen Generator 14 an. Dieser erzeugt zusammen mit einem an ihn angeschlossenen Umrichter 15 elektrische Energie. Der Generator 14 ist vorzugsweise als ein doppelt gespeister Asynchrongenerator ausgeführt, an dessen Stator ein Leitungssystem 17 zur Abführung der elektrischen Energie direkt angeschlossen ist, wobei das Leitungssystem ferner an den Umrichter 15, angeschlossen ist, der wiederum mit einem Rotor des Generators 14 verbunden ist. Das Leitungssystem 17 ist über einen nicht gezeigten Transformator beispielsweise an ein windparkinternes Sammelnetz 9 angeschlossen. Sie kann auch über einen Transformator direkt an ein Mittel- oder Hochspannungsnetz 99 angeschlossen sein.

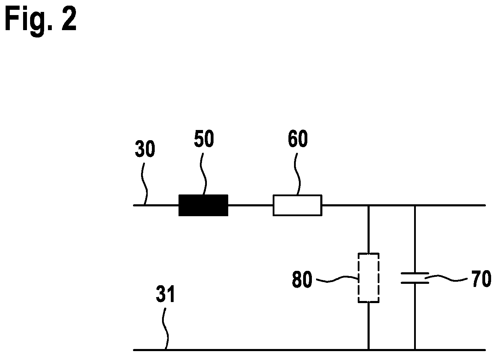

In Fig. 2 ist das Ersatzschaltbild eines Leitungssystems 17 in Form eines abgeschirmten Statorkabels bzw. Einphasenkabels 30, 31 für kleine Frequenzen gezeigt. Die Impedanz des Leiters 30 ist durch die eingezeichnete Induktivität 50, einen ohmschen Widerstand 60 und eine kapazitive Kopplung 70 zu einem Nullleiter 31 dargestellt. Der Widerstand 80 zwischen Leiter 30 und Nullleiter 31 wird im Folgenden vernachlässigt.

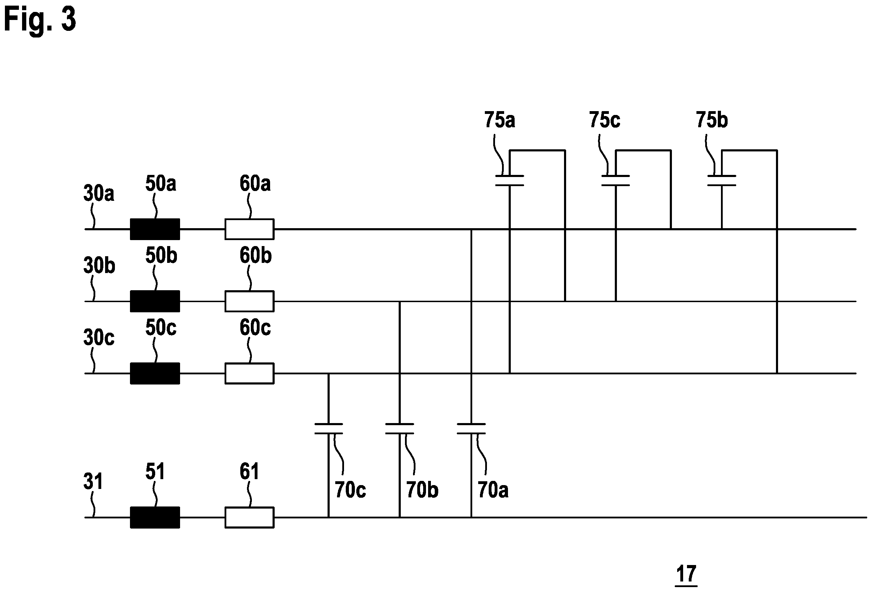

In Fig. 3 ist das Ersatzschaltbild einer dreiphasigen Stromschiene für kleine Frequenzen gezeigt, wie es in Windenergieanlagen als Leitungssystem 17 verwendet wird. Die Stromschiene verfügt über drei Phasen bzw. Leiter 30a, 30b, 30c und einen Nullleiter 31. Jeder Leiter 30a, 30b, 30c kann durch ein Ersatzschaltbild wie es in Fig. 2 gezeigt ist, dargestellt werden. Zwischen den stromführenden Leitern 30a, 30b, 30c treten jeweils zusätzliche parasitäre Kapazitäten 75a, 75b, 75c auf, die im Folgenden mit C_phph bezeichnet sind. Im Gegensatz dazu treten parasitäre Kapazitäten 70a, 70b, 70c (analog zu 70) auch zwischen den Leitern 30a, 30b, 30c zum Nullleiter 31 auf, die im Folgenden mit C_phpe bezeichnet werden.

Bei einem derartigen Aufbau einer Stromschiene und mindestens eines Umrichters 15, treten in der Regel parasitäre Kapazitäten auf, wie sie durch die eingezeichneten Kondensatoren 70a, 70b, 70c, 75a, 75b, 75c in Fig. 3 dargestellt sind. Diese parasitären Kapazitäten erzeugen bei Schaltvorgängen des Frequenzumrichters mit hohen Spannungs-Zeit-Veränderungen dU/dt sogenannte Ableitströme bzw. Common-Mode-Ströme. Hierbei dominieren für eine derartige Erzeugung vorrangig die parasitären Kapazitäten zwischen den Phasen C_phph und zwischen Phase und Nullleiter C_phpe.

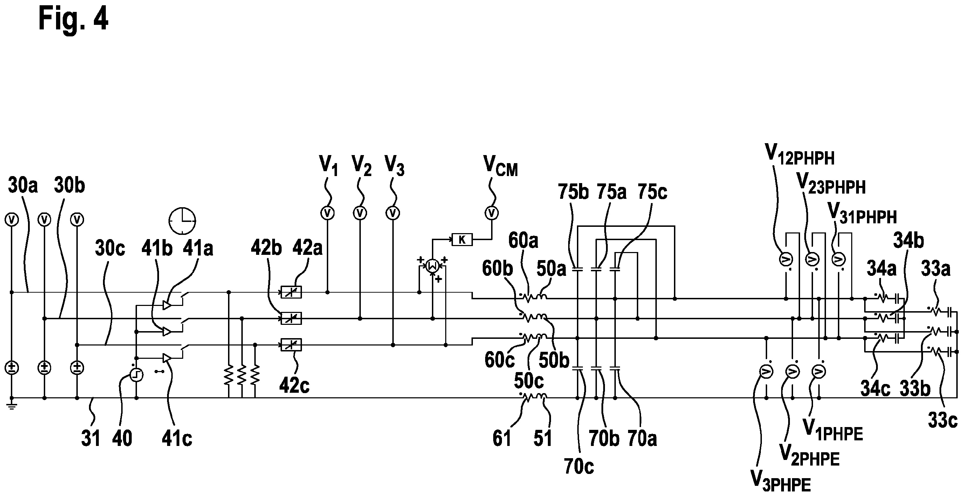

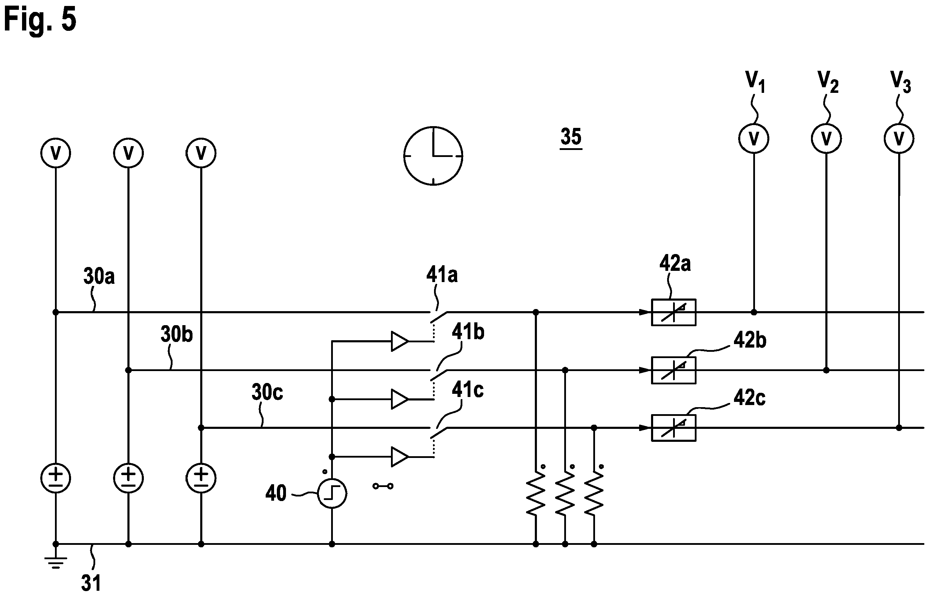

In Fig. 4 ist das Kettenleiter-Ersatzschaltbild einer Stromschiene (oder Kabelsystem) dreiphasig für hohe Frequenzen mit Spannungsquelle 35 und erfindungsgemäßem Leitungsabschluss 37 in Form von mehreren Impedanzgliedern (33a, 33b, 33c, 34a, 34b, 34c) gezeigt. In der Darstellung ist exemplarisch lediglich ein Kettenglied 36 des Kettenleiters gezeigt, es ist aber auch eine Reihe von Kettengliedern 36 denkbar. Die einzelnen Bestandteile werden folgend in den Fig. 5 bis 7 beschrieben.

Eine vergrößerte Darstellung einer schaltbaren Spannungsquelle 35 mit Rampenfunktion ist in Fig. 5 gezeigt. Frequenzumrichter mit dem Prinzip Pulswechselrichter erzeugen pulsweitenmodulierte rechteckförmige Spannungen. Genutzt wird in der Regel die Grundschwingungen dieser Spannung, manchmal auch Oberschwingungen kleiner Ordnungszahl. Für Generatoren oder Transformatoren weisen diese Rechteckspannungen zu hohe Flankensteilheit auf, die bauteileintern dann Resonanzen und Überspannungen bewirken. Die gezeigte Spannungsquelle 35 umfasst drei Leiter 30a, 30b, 30c, wobei an einem Leiter 30a, 30b, 30c und dem Nullleiter 31 eine Spannung angelegt werden kann. Mithilfe einer Zeitsteuerung können die Schalter 41a, 41b, 41c jedes Leiters 30a, 30b, 30c betätigt werden und über eine Rampenfunktion 42a, 42b, 42c an die Leiter 30a, 30b, 30c der Stromschiene angelegt werden. Schließlich sind Abgriffe für Prüfspannungen V1, V2, V3 am Leitungsanfang auf der Stromschiene gezeigt.

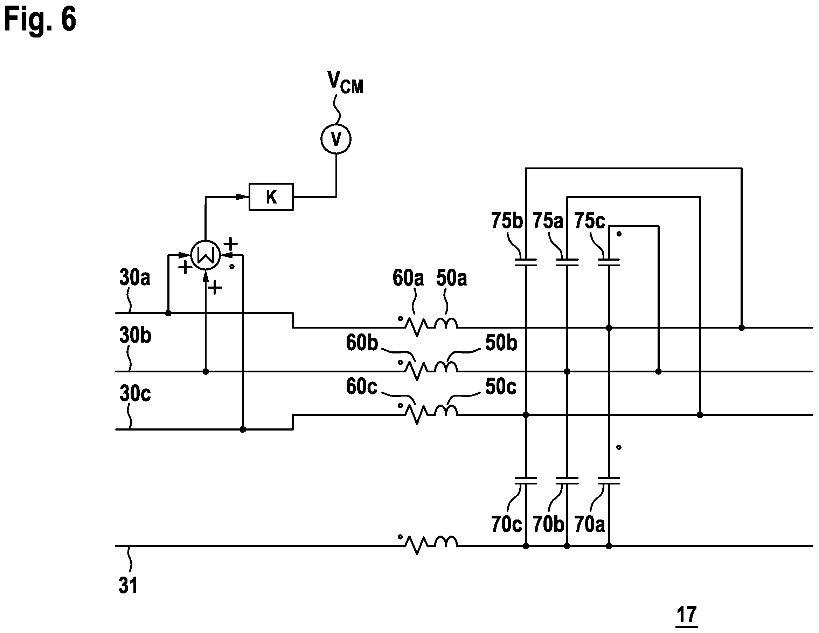

In Fig. 6 ist ein Kettenleiterelement 36 der Stromschiene gemäß des in Fig. 3 gezeigten Ersatzschaltbildes gezeigt. Darüber hinaus wird eine Common-Mode-Spannung VCM als Mittelwert der Leiter 30a, 30b, 30c detektiert. Es können weitere nicht dargestellte Kettenelemente in Reihe geschaltet werden.

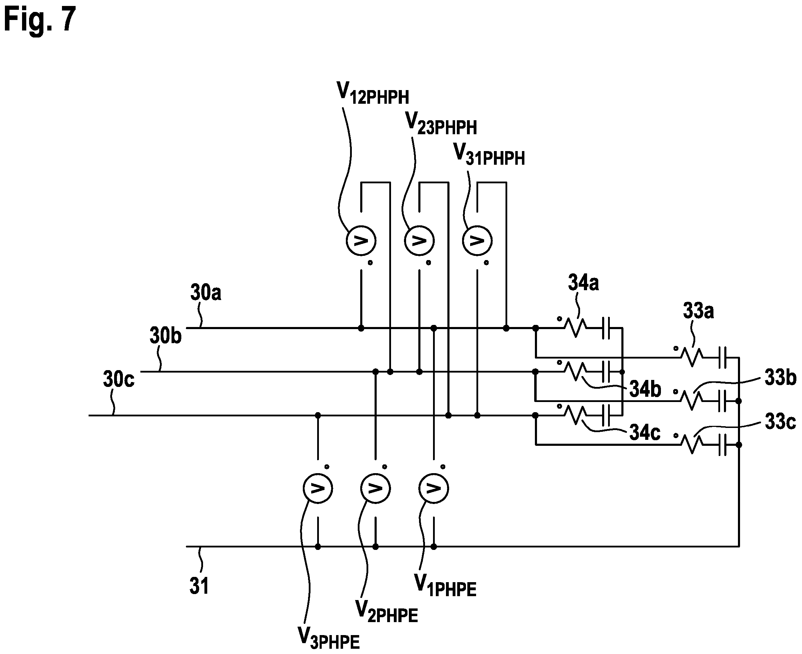

Fig. 7 zeigt das Ersatzschaltbild eines zweifachen Leitungsabschluss 37 mit mehreren erfindungsgemäßen Impedanzgliedern 33a, 33b, 33c, 34a, 34b, 34c. Die gezeigten Impedanzglieder 33a, 33b, 33c, 34a, 34b, 34c bestehen jeweils aus ohmschen Widerständen und Kondensatoren und sind sowohl zwischen den Leitern 30a, 30b, 30c als auch zwischen den Leitern 30a, 30b, 30c und dem Nullleiter 31 angeschlossen. Der erste Teil des Leitungsabschluss 37 zwischen den Leitern 30a, 30b, 30c betrifft die Differential-Mode (DM) Anteile, während der zweite Teil des Leitungsabschluss 37 zwischen den Leitern 30a, 30b, 30c und dem Nullleiter 31 sowohl die DM als auch die CM-Anteile dämpft. Außerdem eingezeichnet sind Abgriffe für Spannungen V1phpe, V2phpe, V3phpe, V12phph, V23phph, V31phph am Leitungsende.

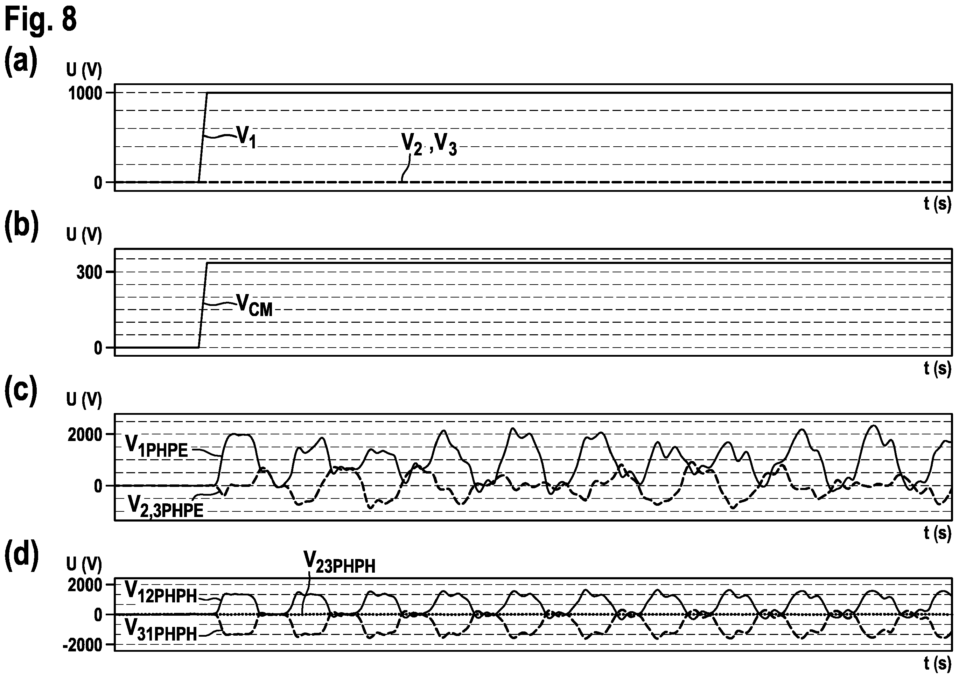

In Fig. 8 sind zeitabhängige Spannungsdiagramme ohne einen erfindungsgemäßen Leitungsabschluss am Leitungsanfang a) und b) und am Leitungsende c) und d) gezeigt. Wie in Fig. 8a gezeigt, wird zu einem definierten Zeitpunkt eine Spannung V1 an den Leiter 30a angelegt. Die übrigen Spannungen V2, V3 sind gleich Null. In Fig. 8b ist die resultierende Common-Mode-Spannung VCM geplottet. Fig. 8c zeigt die simulierten Verläufe der Spannungen V1phpe, V2phpe und V3phpe, wie sie in Fig. 7 eingezeichnet sind. Die Spannungsverläufe zeigen starke Schwankungen der Spannungen mit Amplituden von bis zu 2000 V auf allen Leitern nach Anschalten der Spannung V1 = 1000 V. Daraufhin schwingen die Spannungen ungedämpft auf dem Leiter. Auch die Spannungen V12phph, V23phph und V31phph der Leiter zueinander schwanken um bis zu 2000 V.

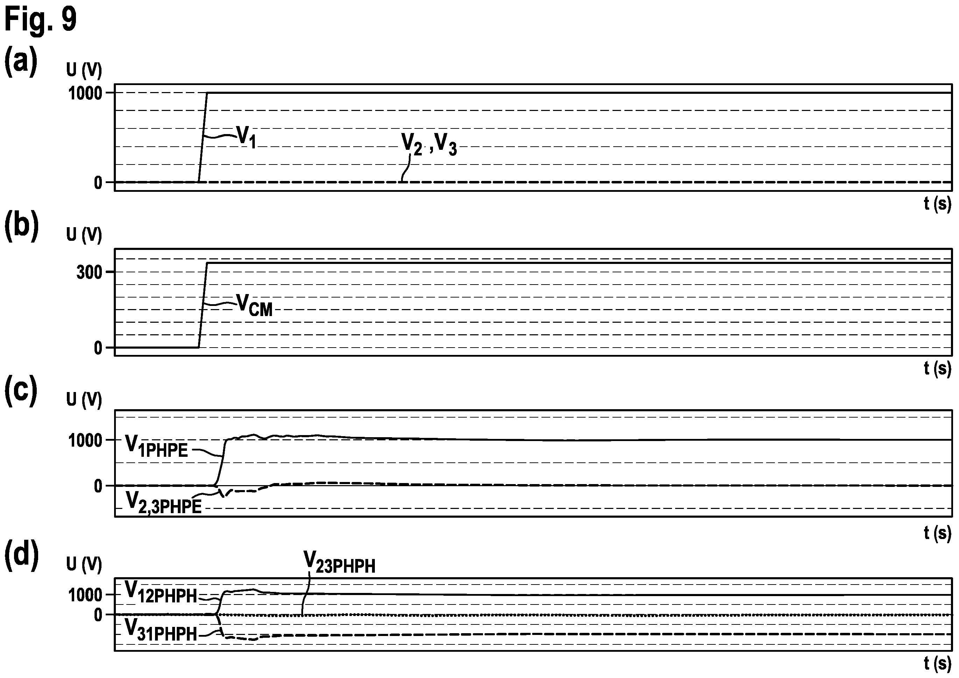

In Fig. 9 sind zeitabhängige Spannungsdiagramme mit einem erfindungsgemäßen Leitungsabschluss 37 gezeigt. Die gezeigten Spannungen entsprechen jeweils den Spannungen am Leitungsanfang a) und b) und am Leitungsende c) und d). Die Figs. 9a und 9b sind identisch zu den Fig. 8a und 8b und zeigen einen Spannungsanstieg der Spannung V1 am Leiter 30a zu einem definierten Zeitpunkt. Die übrigen Spannungen V2, V3 sind gleich Null. In Fig. 9c sind die simulierten Verläufe der Spannungen V1phpe, V2phpe und V3phpe dargestellt. Die Spannungsverläufe zeigen vergleichsweise deutlich reduzierte Schwankungen mit Amplituden von maximal bis zu 1000 V auf allen Leitern 30a, 30b, 30c, was einer Reduzierung der Amplitude um die Hälfte entspricht. Allerdings bilden sich in dieser Abbildung keine Schwingungen und die Spannung V1phpe stellt sich schnell auf 1000 V ein. Auch die Spannungen V12phph, V23phph, V31phph der Leiter 30a, 30b, 30c zueinander schwingen kurz über den erwarteten Wert von +1000 V bzw. -1000 V, stellen sich dann aber schnell auf diesen Wert ein. Diese Dämpfung geschieht aufgrund des Leitungsabschlusses 37 mit den erfindungsgemäßen Impedanzgliedern 33a, 33b, 33c, 34a, 34b, 34c. Dieses dämpft die reflektierte Spannung und verhindert somit ein Entstehen von Resonanzen. Durch die Topologie der Anordnung der RC-Impedanzglieder 33a, 33b, 33c, 34a, 34b, 34c für ein 3-Phasensystem lässt sich bewirken, dass unterschiedliche Filterimpedanzen für Common-Mode und Differential-Mode gewählt werden können, um die unterschiedlichen Wellenwiderstände und Eigenfrequenzen des Leitungssystems 17 optimal abzuschließen.

## Patentansprüche

1. Windenergieanlage mit einem Windrotor (12), einem davon angetriebenen Generator (14), der mit einem Umrichter (15) zusammenwirkt zur Erzeugung elektrischer Leistung, und einem Leitungssystem (17) zum Anschluss an den Umrichter (15), mit einem Nullleiter (31) und einem stromführenden Leiter (30a, 30b, 30c), wobei an einem Ende des Leiters (30a, 30b, 30c) ein Impedanzglied (33a, 33b, 33c) unmittelbar an dem Nullleiter (31) zwischen dem Nullleiter (31) und dem Leiter (30a, 30b, 30c) angeschlossen ist, wobei das Impedanzglied (33a, 33b, 33c) einen Dämpfungswiderstand aufweist, und wobei der Dämpfungswiderstand einem Wellenwiderstand des Leiters (30a, 30b, 30c) entspricht.

2. Windenergieanlage nach Anspruch 1, **dadurch gekennzeichnet, dass** das Leitungssystem (17) ein Kabelsystem und/oder eine Stromschiene ist.

3. Windenergieanlage nach Anspruch 1, **dadurch gekennzeichnet, dass** das Impedanzglied (33a, 33b, 33c) zusätzlich einen Koppelkondensator aufweist.

4. Windenergieanlage nach einem der Ansprüche 1 bis 3, **dadurch gekennzeichnet, dass** ein zweites Impedanzglied (34a, 34b, 34c) am Ende des Leiters (30a, 30b, 30c) vorgesehen ist, wobei das zweite Impedanzglied (34a, 34b, 34c) zwischen dem Leiter (30a, 30b, 30c) und einem zweiten stromführenden Leiter (30a, 30b, 30c) des Leitungssystems (17) angeschlossen ist.

5. Windenergieanlage nach einem der Ansprüche 1 bis 4, **dadurch gekennzeichnet, dass** das Impedanzglied (33a, 33b, 33c, 34a, 34b, 34c) in einem Stromschienenkasten angeordnet ist.

6. Windenergieanlage nach einem der Ansprüche 1 bis 5, **dadurch gekennzeichnet, dass** das Impedanzglied (33a, 33b, 33c, 34a, 34b, 34c) eine Kühlung aufweist.

## Claims

1. Wind turbine having a wind rotor (12), a generator (14) which is driven by the said wind rotor and interacts with a converter (15) for generating electrical power, and a line system (17) for connection to the converter (15), comprising a neutral conductor (31) and a current-carrying conductor (30a, 30b, 30c), wherein, at one end of the conductor (30a, 30b, 30c), an impedance element (33a, 33b, 33c) is directly connected to the neutral conductor (31) between the neutral conductor (31) and the conductor (30a, 30b, 30c), wherein the impedance element (33a, 33b, 33c) has a damping impedance, and wherein the damping impedance corresponds to a characteristic impedance of the conductor (30a, 30b, 30c).

2. Wind turbine according to Claim 1, **characterized in that** the line system (17) is a cable system and/or a busbar.

3. Wind turbine according to Claim 1, **characterized in that** the impedance element (33a, 33b, 33c) additionally has a coupling capacitor.

4. Wind turbine according to one of Claims 1 to 3, **characterized in that** a second impedance element (34a, 34b, 34c) is provided at the end of the conductor (30a, 30b, 30c), wherein the second impedance element (34a, 34b, 34c) is connected between the conductor (30a, 30b, 30c) and a second, current-carrying conductor (30a, 30b, 30c) of the line system (17).

5. Wind turbine according to one of Claims 1 to 4, **characterized in that** the impedance element (33a, 33b, 33c, 34a, 34b, 34c) is arranged in a busbar box.

6. Wind turbine according to one of Claims 1 to 5, **characterized in that** the impedance element (33a, 33b, 33c, 34a, 34b, 34c) has a cooling arrangement.

## Revendications

1. Eolienne, comprenant un rotor éolien (12), un générateur (14) entraîné par celui-ci et qui coopère avec un convertisseur (15) pour produire de la puissance électrique, et un système de conducteurs (17) pour le raccordement au convertisseur (15), avec un fil neutre (31) et un fil conducteur (30a, 30b, 30c), dans laquelle, à une extrémité du fil conducteur (30a, 30b, 30c), une impédance (33a, 33b, 33c) est raccordée directement au fil neutre (31) entre le fil neutre (31) et le fil conducteur (30a, 30b, 30c), l'impédance (33a, 33b, 33c) présentant une résistance d'amortissement, et la résistance d'amortissement correspondant à une résistance caractéristique du fil conducteur (30a, 30b, 30c) .

2. Eolienne selon la revendication 1, **caractérisée en ce que** le système de conducteurs (17) est un système de câbles et/ou une barre conductrice.

3. Eolienne selon la revendication 1, **caractérisée en ce que** l'impédance (33a, 33b, 33c) présente en outre un condensateur de liaison.

4. Eolienne selon l'une quelconque des revendications 1 à 3, **caractérisée en ce qu'**une deuxième impédance (34a, 34b, 34c) est prévue à l'extrémité du fil conducteur (30a, 30b, 30c), la deuxième impédance (34a, 34b, 34c) étant raccordée entre le fil conducteur (30a, 30b, 30c) et un deuxième fil conducteur (30a, 30b, 30c) du système de conducteurs (17).

5. Eolienne selon l'une quelconque des revendications 1 à 4, **caractérisée en ce que** l'impédance (33a, 33b, 33c, 34a, 34b, 34c) est disposée dans une armoire à barres conductrices.

6. Eolienne selon l'une quelconque des revendications 1 à 5, **caractérisée en ce que** l'impédance (33a, 33b, 33c, 34a, 34b, 34c) présente un dispositif de refroidissement.
